# EUROPÄISCHE PATENTANMELDUNG

(11) **EP 2 562 452 A1**
(43) Veröffentlichungstag der Anmeldung: **27.02.2013**
(21) Anmeldenummer: 12169849.2
(22) Anmeldetag: 29.05.2012
(51) Int. Cl.: F16K 31/06, B60T 8/36, F02M 63/00

(54) **Elektromagnetisch betätigbares Ventil**

(30) Priorität: 18.07.2011 DE 102011079338
(71) Anmelder: ROBERT BOSCH GMBH, 70442 Stuttgart (DE)
(72) Erfinder: Heyer, Klaus, 71691 Freiberg (DE); Kaestner, Frank, 74321 Bietigheim-Bissingen (DE); Alaze, Norbert, 71706 Markgroeningen (DE); Kratzer, Dietmar, 71732 Tamm (DE)

(57) **Zusammenfassung**

Die Erfindung betrifft ein elektromagnetisch betätigbares Ventil (1), insbesondere für ein Kraftfahrzeug, mit einer Hülse (2), in der ein Magnetkern (3) fest und ein ein Ventilelement (6) betätigender Magnetanker (4) axial verlagerbar angeordnet sind, wobei mindestens ein Federelement (13) vorgesehen ist, um den Magnetanker (4) auf seiner dem Magnetkern (3) zugewandten Ankerstirnfläche (12) zumindest bei einer Betätigung des Ventils (1) mit einer Federkraft zu beaufschlagen. Dabei ist vorgesehen, dass das Federelement (13) seitlich an dem Magnetanker (4) anliegt und ein um eine ortsfeste Schwenkachse (27) verschwenkbarer Hebel (26) einendig das Federelement (13) und anderendig die Ankerstirnfläche (12) beaufschlagt.

## Beschreibung

Die Erfindung betrifft ein elektromagnetisch betätigbares Ventil gemäß dem Oberbegriff des Anspruchs 1.

### Stand der Technik

Derartige Ventile sind aus dem Stand der Technik, beispielsweise als Dosier- oder Einspritzventile für Kraftfahrzeuge, bekannt. So offenbart beispielsweise die Druckschrift EP 1 232 082 B1 ein elektromagnetisch betätigbares Ventil mit einer Hülse, in der ein Magnetkern fest und ein ein Ventilelement betätigender Magnetanker axial verlagerbar angeordnet sind. Das Ventilelement wirkt dabei mit einer Ventilöffnung zum Verschließen oder Freigeben der Ventilöffnung zusammen und ist mit dem Magnetanker derart verbunden, dass es sich, wenn der Magnetanker von dem Magnetkern angezogen wird, von der Ventilöffnung löst und dadurch diese freigibt. Zwischen dem Magnetanker und dem Magnetkern wirken dabei zwei Federelemente, die im Wesentlichen zur Rückstellung des Magnetankers dienen, wodurch die Ventilöffnung im stromlosen Zustand des Ventils geschlossen wird/ist. Eines der Federelemente ist als Schraubenfeder ausgebildet und liegt in einer Vertiefung des Magnetankers ein. Das andere ist als Scheibenfeder ausgebildet, die zwischen den Stirnflächen des Magnetankers, der sogenannten Ankerstirnfläche, und des Magnetkerns, der sogenannten Kernstirnfläche, gehalten ist. Die Federelemente sind dazu vorgesehen, um den Magnetanker auf seiner dem Magnetkern zugewandten Ankerstirnfläche mit einer Federkraft zu beaufschlagen, die den Magnetanker in die geschlossene Stellung drängt, sodass ein stromlos geschlossenes Ventil vorliegt. Zumindest die Scheibenfeder muss in ihrer Neutralstellung nicht vorgespannt zwischen den Ankerstirnflächen gehalten sein. Vielmehr ist es auch denkbar, dass die Scheibenfeder erst bei einer Betätigung des Ventils, wenn sich der Magnetanker dem Magnetkern nähert, beaufschlagt beziehungsweise verspannt wird.

### Offenbarung der Erfindung

Das erfindungsgemäße Ventil hat den Vorteil, dass der Magnetanker durch die Federkraft eines Federelements nicht nur in seiner Bewegung in Richtung des Magnetkerns gebremst beziehungsweise gedämpft und zurückgestellt wird, sondern dass er darüber hinaus auch eine vorgespannte Führung in der Hülse erhält. Das erfindungsgemäße Ventil zeichnet sich durch die Merkmale des Anspruchs 1 aus, wobei das Federelement seitlich an dem Magnetanker anliegt und ein um eine ortsfeste beziehungsweise hülsenfeste Schwenkachse verschwenkbarer Hebel einendig das Federelement und anderendig die Ankerstirnfläche beaufschlagt. Erfindungsgemäß ist also vorgesehen, dass das Federelement nicht direkt zwischen Magnetanker und Magnetkern verspannt beziehungsweise verspannbar gehalten ist, sondern über eine Hebelmechanik auf die Ankerstirnfläche wirkt. Darüber hinaus stützt sich das Federelement auch nicht an dem Magnetkern ab. Stattdessen liegt es seitlich an dem Magnetanker, also an der Mantelaußenfläche des Magnetankers an, sodass der Hebel, der auf dem Federelement und der Ankerstirnfläche aufliegt beziehungsweise diese beaufschlagt, gleichzeitig dafür sorgt, dass der Magnetanker radial mit einer Federkraft beaufschlagt wird, die eine definierte Führung des Ankers in der Hülse gewährleistet beziehungsweise diesen stabilisiert. Die Schwenkachse des Hebels ist dabei ortsfest bezüglich der Hülse und des Magnetkerns angeordnet, sodass sich die Position des Hebels bezüglich des Magnetankers und des Federelements im Betrieb verändert. Zweckmäßigerweise wird daher eine Materialkombination für Hebel und Federelement gewählt, die einen möglichst geringen Reibverschleiß gewährleistet. Das Federelement kann dabei entweder auf der Mantelaußenfläche des Magnetankers aufliegen oder in einer Vertiefung des Magnetankers angeordnet sein, beispielsweise in einer Längsnut, die auch zum Druckausgleich oder zur Entlüftung nutzbar ist beziehungsweise genutzt wird.

Vorzugsweise ist die Federachse des Federelements zumindest im Wesentlichen senkrecht oder schräg bezüglich der Ventilachse beziehungsweise der Bewegungsrichtung des Ankers ausgerichtet. Unter der Federachse des Federelements ist hierbei die Achse zu verstehen, in welche das Federelement maßgeblich elastisch verformbar ist und somit entsprechend in Richtung der Federachse seine Federkraft ausübt. Durch die senkrechte oder schräge Ausrichtung der Federachse lässt sich somit gezielt eine Querkraftkomponente auf den Magnetanker ausüben, die diesen in der Hülse ausrichtet beziehungsweise stabilisiert.

Gemäß einer vorteilhaften Weiterbildung der Erfindung ist vorgesehen, dass das Federelement als Federscheibe oder als Blattfeder ausgebildet ist. Die Federscheibe ist vorzugsweise als Federscheibenring ausgebildet. Zum Halten des Federelements an dem Magnetanker sind vorzugsweise ein oder mehrere Haltevorsprünge vorgesehen, die radial von der Mantelaußenfläche des Magnetankers vorstehen und das Federelement formschlüssig an dem Magnetanker, zumindest in axialer und in Umfangsrichtung - bezüglich des Magnetankers - gesehen, halten. Eine radiale Vormontage des Federelements an dem Magnetanker erfolgt vorzugsweise durch das Vorsehen des Hebels und/oder durch einen Hintergriffsitz, der durch die Haltevorsprünge gebildet wird, und in welchen das Federelement bei der Montage einclipsbar ist beziehungsweise eingeclipst wird. Dadurch lässt sich das Ventil auf einfache und kostengünstige Art und Weise montieren und gewährleistet die Position des Federelements, sodass stets die gewünschte Federkraft auf die Ankerstirnfläche wirkt und das Ventil jederzeit wieder sicher geschlossen wird.

Vorzugsweise ist die ortsfeste Schwenkachse dem Magnetkern zugeordnet. Hierbei kann vorgesehen sein, dass der Hebel an dem Magnetkern verschwenkbar gelagert ist, oder an der Magnethülse im Bereich des Magnetkerns. So ist besonders bevorzugt vorgesehen, dass der Magnetkern stirnseitig eine Aussparung aufweist, in welcher der Hebel bereichsweise einliegt.

Gemäß einer bevorzugten Weiterbildung der Erfindung ist vorgesehen, dass der Hebel steif ausgebildet ist, sodass die Federkraft vollständig oder zumindest im Wesentlichen vollständig auf die Ankerstirnfläche übertragen wird. Dadurch lässt sich die gewünschte Federkraft einfach darstellen und das Federelement entsprechend dimensionieren beziehungsweise ausbilden.

Gemäß einer alternativen Ausführungsform der Erfindung ist vorgesehen, dass der Hebel elastisch verformbar ausgebildet ist, um ein weiteres Federelement zu bilden. In diesem Fall sind dann zwei Federelemente in Reihe geschaltet. Der Hebel weist vorzugsweise zwei Hebelarme auf, die im Bereich des Schwenkgelenks zusammengeführt sind. Dabei kann einer der Hebelarme oder es können beide Hebelarme elastisch verformbar beziehungsweise steif ausgebildet sein, um eine gewünschte Federwirkung zu erzielen. Durch eine entsprechende Wahl der Elastizität und der Hebelarmlängen sowie der entsprechenden Ausbildung des Federelements an der Mantelaußenfläche des Magnetankers, lässt sich auf diese Art und Weise eine gewünschte Kraft-Weg-Federkennlinie erzeugen. Besonders bevorzugt ist vorgesehen, dass der Hebel winkelförmig, insbesondere zumindest im Wesentlichen rechtwinklig ausgebildet ist, sodass seine Hebelarme einen Winkel, insbesondere von 90° oder etwa 90°, einschließen.

Bevorzugt sind mehrere der Federelemente vorgesehen, die insbesondere gleichmäßig über den Umfang des Magnetankers verteilt angeordnet sind. Insbesondere sind mehrere der Federelement-Hebel-Kombinationen über den Umfang verteilt angeordnet, um eine gewünschte Gesamtfederkraft zu erhalten, und um eine gleichmäßige Beanspruchung und Beaufschlagung insbesondere des Magnetankers zu erreichen.

Besonders bevorzugt sind die mehreren Federelemente beziehungsweise Federelement-Hebel-Kombinationen symmetrisch über den Umfang des Magnetankers verteilt angeordnet, sodass die je nach Ausrichtung der Federachse eingestellten Querkraftkomponenten sich gegenseitig kompensieren und dadurch der Magnetanker wie gewünscht in der Hülse sicher geführt und stabilisiert ist.

Weiterhin ist mit Vorteil insbesondere vorgesehen, dass der Magnetanker an seiner Mantelaußenfläche zwei axial oder in Umfangsrichtung voneinander beabstandet angeordnete Erhebungen aufweist, auf denen das Federelement aufliegt. Durch den zwischen den Erhebungen gebildeten Freiraum lässt sich das Federelement zwischen die Erhebungen bereichsweise durch elastische Verformung einbringen, wodurch die Federkraft erzeugt wird. Anstelle von Erhebungen ist es natürlich auch denkbar, eine entsprechende Vertiefung in der Mantelaußenfläche des Magnetankers vorzusehen. Sind die Erhebungen axial voneinander beabstandet, so erstrecken sie sich jeweils bevorzugt über den gesamten Umfang des Magnetankers als ringförmiger Stege beziehungsweise Vorsprünge, wodurch die Herstellung des Magnetankers sowie des Ventils kostengünstiger wird, insbesondere da die Erhebungen an unterschiedlichen Umfangsstellen der Mantelaußenfläche für unterschiedliche Federelemente beziehungsweise Feder-Hebel-Kombinationen nutzbar und der Magnetanker beziehungsweise die Erhebungen beispielsweise durch drehende Bearbeitung kostengünstig herstellbar sind. Natürlich kann aber auch jedem Federelement ein gesondertes Paar von Erhebungen beziehungsweise eine gesonderte Vertiefung zugeordnet werden. Ist als Federelement eine Scheibenfeder - kreisförmig oder kreisringförmig - vorgesehen, so bietet sich als Vertiefung eine kugelabschnittsförmige Vertiefung oder eine kreisringförmige Erhebung an. Natürlich lässt sich aber auch die Scheibenfeder mit sich vollständig oder bereichsweise über den Umfang erstreckenden Erhebungen kombinieren.

Ferner ist mit Vorteil vorgesehen, dass die axial voneinander beabstandeten Erhebungen derart weit beabstandet sind, dass der Hebel einendig das Federelement stets zwischen den Erhebungen beaufschlagt. Hierdurch wird gewährleistet, dass stets der Hebel mit dem elastisch verformbaren und eine Federkraft bereitstellenden Bereich des Federelements zusammenwirkt. Da sich die Position des Hebels bezüglich des Federelements im Betrieb verändert, ändern sich hierdurch darüber hinaus auch gegebenenfalls die dadurch resultierenden Federkräfte des Federelements. Durch eine entsprechend gewählte Hebelarmlänge und/oder Schwenkachsenposition bezüglich des Federelements lässt sich dadurch die Kraft-Feder-Kennlinie weiter beeinflussen.

Im Folgenden soll die Erfindung anhand der Zeichnung näher erläutert werden. Dazu zeigen
- Figur 1: ein elektromagnetisch betätigbares Ventil in einer Längsschnittdarstellung und
- Figur 2: eine vergrößerte Detailansicht einer vorteilhaften Weiterbildung des Ventils.

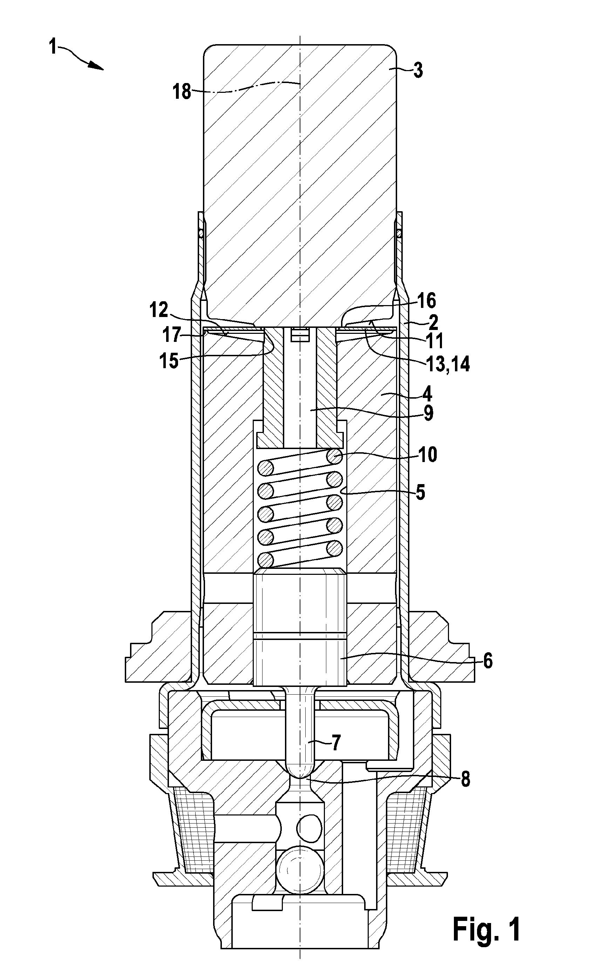

Figur 1 zeigt in einer Längsschnittdarstellung ein elektromagnetisch betätigbares Ventil 1, das insbesondere in Hydrauliksystemen von Kraftfahrzeugen verbaubar ist und anhand dessen die prinzipielle Funktionsweise erläutert werden soll. Das Ventil 1 weist eine im Wesentlichen zylinderförmige Hülse 2 auf, welche an einem Ende einen Magnetkern 3 trägt, der fest mit der Hülse 2 verbunden ist. Dem Magnetkern 3 ist eine hier nicht näher dargestellte Spule zugeordnet, durch deren Bestromung der Magnetkern 3 einen in der Hülse axial verlagerbar angeordneten Magnetanker 4 anzieht.

Der Magnetanker 4 weist eine gestufte Durchgangsbohrung 5 auf, in welcher an der dem Magnetkern 3 abgewandten Seite ein Ventilelement 6 gehalten ist, das eine Ventilspitze 7 aufweist, die mit einem Ventilsitz beziehungsweise mit einer Ventilöffnung 8 zum Verschließen oder Freigeben eines Durchströmungsquerschnitts zusammenwirkt. In der Durchbohrung 5 ist weiterhin ein axial verlagerbares Druckstück 9 gehalten, das einendig von einem als Schraubenfeder 10 ausgebildeten Federelement beaufschlagt ist, welches sich einendig an dem Ventilelement 6 abstützt, und anderendig an dem Magnetkern 3. Der Magnetkern 3 weist hierbei eine dem Magnetanker 4 zugewandte, rotationssymmetrische Kernstirnfläche 11 auf, und der Magnetanker 4 eine dem Magnetkern 3 zugewandte, rotationssymmetrische Ankerstirnfläche 12. Das Druckstück 9 ragt über die Ankerstirnfläche 12 hinaus und liegt an der Kernstirnfläche 11 mittig an.

Zwischen dem Magnetkern 3 und dem Magnetanker 4 ist ein weiteres, elastisch verformbares Federelement 13 vorgesehen, das vorliegend als rotationssymmetrische Scheibenfeder 14 ausgebildet und zwischen der Kernstirnfläche 11 und der Ankerstirnfläche 12 verspannt beziehungsweise vorgespannt gehalten ist. In der dargestellten Ausgangsstellung, also im unbetätigten Zustand, muss das Federelement 13 jedoch nicht unbedingt vorgespannt beziehungsweise verspannt gehalten sein. Die Ausbildung kann gemäß einer alternativen Ausführungsform auch derart erfolgen, dass das Federelement 13 erst bei Betätigung des Ventils 1 zwischen den beiden Stirnflächen 11 und 12 verspannt wird. Die Scheibenfeder 14 weist mittig eine Öffnung 15 auf, durch welche das Druckstück 9 hindurchragt, um an der Kernstirnfläche 11 anzuliegen.

Die Kernstirnfläche 11 weist dabei mittig einen Bereich auf, in welchem sich die Kernstirnfläche 11 senkrecht zur Achse des Ventils 1 erstreckt, und auf welcher das Druckstück 9 aufliegt. Dieser Bereich weist einen Radius auf, der über das Druckstück 9 hinausgeht und somit eine Auflagefläche für die Scheibenfeder 14 bildet. Der Magnetanker 4 weist an seiner Ankerstirnfläche 12 einen Außenbereich auf, in welchem die Ankerstirnfläche 12 ebenfalls im Wesentlichen senkrecht zur Achse 18 des Ventils (durch eine Strich-Punkt-Linie angedeutet) ausgerichtet ist. Dieser Bereich ist dabei ringförmig ausgebildet und liegt am äußersten Rand der Ankerstirnfläche 12. Auf diesem Bereich liegt die Scheibenfeder 14 mit ihrem äußeren Randbereich auf. Die Scheibenfeder 14 bildet somit mit dem Magnetanker 4 und dem Magnetkern 3 jeweils einen Anlagepunkt 16 beziehungsweise 17, die in dem vorliegenden Ausführungsbeispiel als ringförmige Auflageflächen ausgebildet sind. Im Übrigen sind die Kernstirnfläche 11 und die Ankerstirnfläche 13 in Radialerstreckung, also ausgehend von der Achse des Ventils 1, schräg verlaufend ausgebildet, wobei die schräg verlaufenden Bereiche im Wesentlichen parallel zueinander verlaufen, sodass die Kernstirnfläche 11 und die Ankerstirnfläche 12 insoweit komplementär ausgebildet sind.

Im Betrieb, wenn das Magnetventil bestromt beziehungsweise betätigt wird, zieht der Magnetkern 3 den Magnetanker 4 an, wodurch die dazwischen verspannt gehaltene Scheibenfeder 14 verformt wird und dadurch eine Federkraft erzeugt, die zwischen Magnetkern 3 und Magnetanker 4 wirkt.

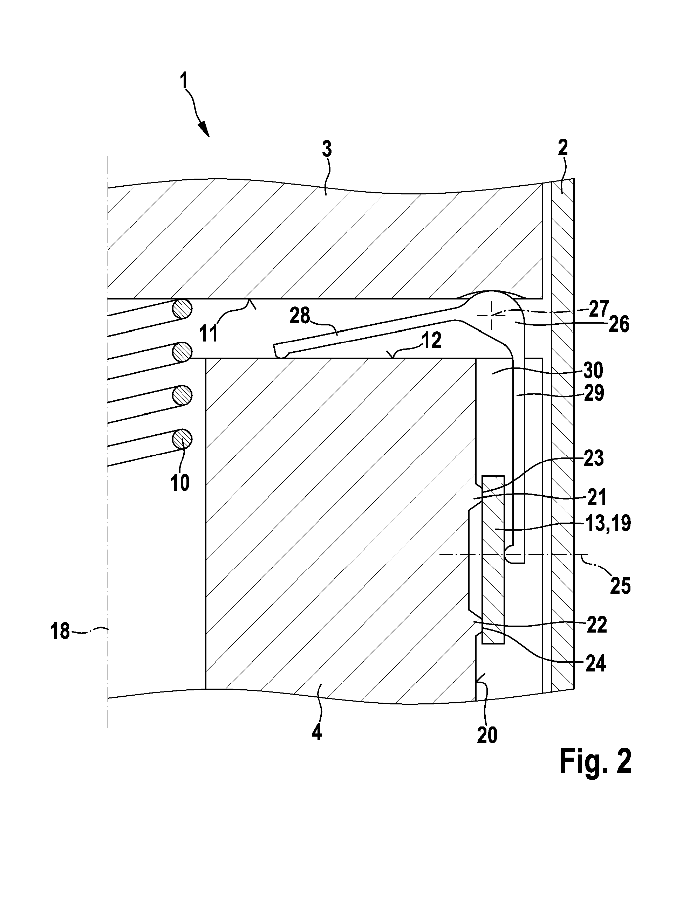

Figur 2 zeigt in einer vergrößerten Detailansicht des Ventils 1 eine bevorzugte Ausbildung des Ventils 1 im Bezug auf das Federelement 13. Im Unterschied zu der obenstehend beschriebenen Ausführungsform ist das Federelement 13 nicht als koaxial zur Ventilachse 18 angeordnete Scheibenfeder, sondern als seitlich an dem Magnetanker 4 angeordnete Blattfeder 19 ausgebildet. Die Blattfeder 19 liegt somit zwischen der Mantelaußenwand 20 des Magnetankers 4 und der Mantelinnenwand der Hülse 2, wobei ihre Angriffsflächen dem Magnetanker 4 beziehungsweise der Hülse 2 zugewandt sind.

Die Mantelaußenfläche 20 weist zwei axial zueinander beabstandete Erhebungen 21 und 22 auf, auf welchen die Blattfeder 19 aufliegt, sodass zwei axial beabstandet zueinander angeordnete Auflagestellen 23 beziehungsweise 24 gebildet werden. Der zwischen den Erhebungen 21 und 22 befindliche Freiraum dient zur bereichsweisen Aufnahme der Blattfeder 19, wenn diese in Richtung des Magnetankers verformt wird. Die Federachse 25 des Federelements 13, also die Achse, entlang welcher die Federkraft zumindest im Wesentlichen erzeugt wird, ist somit in dem vorliegenden Ausführungsbeispiel senkrecht bezüglich der Ventilachse 18 ausgerichtet.

Weiterhin ist ein Hebel 26 vorgesehen, der um eine ortsfeste beziehungsweise hülsenfeste Schwenkachse 27 verschwenkbar gelagert ist. Die Schwenkachse 27 wird dabei zweckmäßigerweise durch ein Schwenklager gebildet, das an der Hülse 2 und/oder an dem Magnetkern 3 befestigt ist. Der Hebel 26 weist zwei Hebelarme 28 und 29 auf, die etwa in einem rechten Winkel zueinander ausgerichtet sind und im Bereich der Schwenkachse 27 zusammenführen. Das freie Ende des Hebelarms 28 liegt dabei auf der Ankerstirnfläche 12 auf, und das freie Ende des Hebelarms 29 auf der der Hülse zugewandten Seite des Federelements 13, sodass der Hebel 26 einendig die Ankerstirnfläche 12 und anderendig das Federelement 13 beaufschlagt. Dabei ist der Hebelarm 29 derart ausgebildet, dass er mit seinem freien Ende stets axial gesehen zwischen den Erhebungen 21 und 22 auf der anderen Seite der Blattfeder 19 aufliegt, sodass die Federfunktion des Federelements stets nutzbar ist.

Wird im Betrieb der elektromagnetische Aktor aktiviert, also die nicht dargestellte Magnetspule bestromt, zieht der Magnetkern 3 den Magnetanker 4 an, sodass der Luftspalt zwischen der Ankerstirnfläche 12 und der Kernstirnfläche 11 verkleinert wird. Dabei wird der Hebelarm 28 nach oben beziehungsweise in Richtung des Magnetkerns 3 verlagert, wodurch der Hebelarm 29 in Richtung des Magnetankers 4 verschwenkt wird. Bei einer bevorzugt steifen Ausbildung des Hebels 26 wird dabei das Federelement 13 entsprechend des Bewegungswegs des Magnetankers 4 elastisch in Richtung des Magnetankers 4 verformt. Wird die Spule wieder stromlos geschaltet, drängt das Federelement 13 den Hebel 26 in entgegengesetzte Richtung, sodass der Hebelarm 28 die Ankerstirnfläche 12 mit der Federkraft beaufschlagt und dadurch den Magnetanker 4 in seine Ausgangsstelle zurückverlagert. Gemäß einer alternativen Ausführungsform kann auch vorgesehen sein, dass zumindest einer der Hebelarme 28, 29 elastisch verformbar ausgebildet ist, um ein weiteres Federelement zu bilden, sodass dann zumindest zwei Federelemente in Reihe geschaltet wären, um auf die Ankerstirnfläche 12 zu wirken. Darüber hinaus ist es auch denkbar, das Ventil ohne die Schraubenfeder 10 auszubilden.

Der Hebel 26 und das Federelement 13 bilden eine Federelement-Hebel-Kombination, die vorzugsweise mehrfach vorgesehen ist, und besonders bevorzugt gleichmäßig verteilt über den Umfang des Magnetankers 4 vorgesehen ist, sodass der Magnetanker von mehreren Seiten auch radial durch die Federkraft des Federelements 13 beaufschlagt wird. Bei einer symmetrischen Anordnung der Feder-Hebel-Kombinationen wird dadurch gewährleistet, dass der Magnetanker 4 stets axial in der Ventilhülse 2 ausgerichtet ist und entsprechend geführt und stabilisiert wird. Die Querkräfte werden dabei an dem Schwenklager des Hebels 26 abgestützt. Durch eine entsprechende Materialkombination von Hebel 26 und Federelement 13 wird darüber hinaus gewährleistet, dass wenig Reibungsverschleiß an den Auflagestellen entsteht.

Durch die Abstimmung der Hebelarmlängen kann eine Weg- und Kraftübersetzung von Federelementverformung zu Magnetankerhub erzielt werden. Dies ist zum Beispiel dann sinnvoll, um die Hubbelastung des Federelements 13 möglichst gering zu halten und gleichzeitig übliche Anker-Hübe im Ventil 1 realisieren zu können. Die Werkstoffe des Hebels 26 und/oder des Federelements 13 sind vorzugsweise nicht magnetisch ausgebildet, sodass der Magnetkraftverlauf nicht beeinflusst wird. Natürlich ist es aber auch denkbar, Hebel 26 und Federelement 13 magnetisch, zumindest teilweise, auszubilden, um eine gewünschte Beeinflussung des Magnetkraftverlaufs im Ventil 1 zu erzielen.

Wie aus Figur 2 ersichtlich, liegen das Federelement 13 und der Hebel 26 dabei bevorzugt jeweils in einer Längsnut 30 des Magnetankers ein, die auch zur Entlüftung beziehungsweise zum Volumen- und Druckausgleich des Ventils 1 dient. Alternativ zur Ausbildung als Blattfeder 19 kann das Federelement 13 auch als Scheibenfeder oder dergleichen ausgebildet sein. Durch unterschiedlich hohe Erhebungen 21 und 22 lässt sich darüber hinaus eine Schrägstellung des Federelements 13 realisieren, die zu einer entsprechenden auf den Magnetanker 4 wirkenden Querkraftkomponente führt.

Gemäß einer hier nicht dargestellten Weiterbildung ist vorgesehen, dass zumindest oberhalb und/oder unterhalb der Erhebungen 21, 22 radial vorstehende Haltevorsprünge an der Mantelaußenfläche 20 des Magnetankers 4 vorgesehen sind, die zum formschlüssigen Halten der Blattfeder 19 in ihrer axialen Lage an dem Magnetanker 4 dienen. Zweckmäßigerweise sind auch in der Umfangsvorrichtung Haltevorsprünge vorgesehen, um ein Verrutschen der Blattfeder 19 zu verhindern. Natürlich ist auch in einer alternativen Ausführung denkbar, dass das freie Ende des Hebelarms 29 zwei Auflagepunkte bildet, und die Mantelaußenseite 20 des Magnetankers 4 nur eine Erhebung bereitstellt, die zwischen den Auflagepunkten des Hebelarms 29 liegt, sodass das Federelement in die entgegengesetzte Richtung verformt wird.

## Patentansprüche

1. Elektromagnetisch betätigbares Ventil (1), insbesondere für ein Kraftfahrzeug, mit einer Hülse (2), in der ein Magnetkern (3) fest und ein ein Ventilelement (6) betätigender Magnetanker (4) axial verlagerbar angeordnet sind, wobei mindestens ein Federelement (13) vorgesehen ist, um den Magnetanker (4) auf seiner dem Magnetkern (3) zugewandten Ankerstirnfläche (12) zumindest bei einer Betätigung des Ventils (1) mit einer Federkraft zu beaufschlagen, **dadurch gekennzeichnet, dass** das Federelement (13) seitlich an dem Magnetanker (4) anliegt und ein um eine ortsfeste Schwenkachse (27) verschwenkbarer Hebel (26) einendig das Federelement (13) und anderendig die Ankerstirnfläche (12) beaufschlagt.

2. Ventil nach Anspruch 1, **dadurch gekennzeichnet, dass** eine Federachse (25) des Federelements (13) zumindest im Wesentlichen senkrecht oder schräg bezüglich der Ventilachse (18) ausgerichtet ist.

3. Ventil nach einem der vorhergehenden Ansprüche, **dadurch gekennzeichnet, dass** das Federelement (13) als Federscheibe oder Blattfeder (19) ausgebildet ist.

4. Ventil nach einem der vorhergehenden Ansprüche, **dadurch gekennzeichnet, dass** die ortsfeste Schwenkachse (22) dem Magnetkern (3) zugeordnet ist.

5. Ventil nach einem der vorhergehenden Ansprüche, **dadurch gekennzeichnet, dass** der insbesondere winkelförmige Hebel (26) steif ausgebildet ist.

6. Ventil nach einem der vorhergehenden Ansprüche, **dadurch gekennzeichnet, dass** der insbesondere winkelförmige Hebel (26) elastisch verformbar ausgebildet ist, um ein weiteres Federelement zu bilden.

7. Ventil nach einem der vorhergehenden Ansprüche, **dadurch gekennzeichnet, dass** mehrere der Federelemente (13) und Hebel (26) vorgesehen sind, die insbesondere gleichmäßig über den Umfang des Magnetankers (4) verteilt angeordnet sind.

8. Ventil nach einem der vorhergehenden Ansprüche, **dadurch gekennzeichnet, dass** die mehreren Federelemente (13) und Hebel (26) symmetrisch über den Umfang des Magnetankers (4) verteilt angeordnet sind.

9. Ventil nach einem der vorhergehenden Ansprüche, **dadurch gekennzeichnet, dass** der Magnetanker (4) an seiner Mantelaußenfläche (20) zwei axial oder in Umfangsrichtung voneinander beabstandet angeordnete Erhebungen (21,22) aufweist, auf denen das Federelement (13) aufliegt.

10. Ventil nach einem der vorhergehenden Ansprüche, **dadurch gekennzeichnet, dass** die axial voneinander beabstandeten Erhebungen (21,22) derart weit beabstandet sind, dass der Hebel (26) einendig das Federelement (13) stets zwischen den Erhebungen (21,22) beaufschlagt.
